# EUROPEAN PATENT APPLICATION

(11) **EP 4 679 065 A1**
(43) Date of publication of application: **14.01.2026**
(21) Application number: 25170066.2
(22) Date of filing: 11.04.2025
(51) Int. Cl.: G01N 21/88, F21V 33/00, G01N 21/95

(54) **APPARATUS FOR INSPECTING ELECTRODE ASSEMBLY OF SECONDARY BATTERY**

(30) Priority: 08.07.2024 KR 20240089957
(71) Applicant: SAMSUNG SDI CO., LTD., Yongin-si, Gyeonggi-do 17084 (KR)
(72) Inventor: KIM, Geonsoo, 17084 Yongin-si (KR); RYU, Sang Hyun, 17084 Yongin-si (KR); YOON, Taejin, 17084 Yongin-si (KR); AN, Seongbae, 17084 Yongin-si (KR); LEE, Jongwook, 17084 Yongin-si (KR); KANG, Jiuk, 17084 Yongin-si (KR); BAN, Bokyun, 17084 Yongin-si (KR)
(74) Representative: Marks & Clerk LLP

(57) **Abstract**

An apparatus for inspecting an electrode assembly (104) of a secondary battery includes: a table (102) configured to receive an electrode assembly that is to be inspected; a light (112) configured to radiate light onto the electrode assembly; a lighting holder (114) configured to support the light; a distance adjustment portion (116) configured to adjust a distance between the lighting holder and the electrode assembly; and a tilting portion (118) configured to adjust an angle at which the lighting holder radiates light onto the electrode assembly. The tilting portion rotates the light together with the lighting holder.

## Description

### BACKGROUND

### 1. Field

Aspects of embodiments of the present disclosure relate to an apparatus for inspecting an electrode assembly of a secondary battery.

### 2. Description of Related Art

Different from primary batteries that are not designed to be recharged, secondary batteries are batteries that are designed to be charged and discharged. Generally, a secondary battery includes an electrode assembly including a positive electrode plate, a negative electrode plate, and a separator. The positive or negative electrode plate may be manufactured through coating, rolling, slitting, and notching processes. An electrode assembly manufactured by winding or stacking electrode plates and separators is assembled in (or arranged in) a soft pouch or a hard case (or a can) to manufacture a secondary battery.

A secondary battery manufacturing process may include inspecting an electrode assembly. Currently, an X-ray generator and a detector are used to acquire projected images of electrode tabs of an electrode assembly to detect defects in omissions, folding, shapes, etc., of the electrode tabs. Such an electrode assembly inspection technique is an expensive inspection method because it uses X-ray equipment to acquire projected images of electrode tabs and three-dimensional (3D) vision equipment.

The above information disclosed in this Background section is for enhancement of understanding of the background of the present disclosure, and therefore, it may contain information that does not constitute a related (or prior) art.

### SUMMARY

Embodiments of the present disclosure are directed to an apparatus for inspecting an electrode assembly of a secondary battery that uses two dimensional (2D) vision while having efficiency comparable to efficiency of three-dimensional (3D) vision inspection using X-rays through optimal design of a lighting and related mechanical parts, and to a light and a tilting device applicable thereto.

According to a first embodiment of the present disclosure, an apparatus for inspecting an electrode assembly of a secondary battery includes a table configured to receive an electrode assembly to be inspected, a light configured to radiate light onto the electrode assembly, a lighting holder configured to support the light, a distance adjustment portion configured to adjust a distance between the lighting holder and the electrode assembly, and a tilting portion configured to adjust an angle at which the lighting holder radiates light onto the electrode assembly. The tilting portion rotates the light together with the lighting holder.

The lighting holder may have a frame shape with an inner space that is vertically perforated.

The light may have a frame shape with an inner space that is vertically perforated.

The distance adjustment portion may comprise a bar installed in the lighting holder.

The distance adjustment portion may comprise a compression/extension cylinder configured to decrease or increase a distance between the lighting holder and the tilting portion.

The tilting portion may comprise a fixed body, which may be attachable to a structure, and a movable body rotatably coupled to the fixed body, wherein the fixed body may have a first arc hole and a second arc hole that symmetrically face each other, and wherein the movable body may comprise a first protrusion inserted into the first arc hole and a second protrusion inserted into the second arc hole.

The first arc hole in the fixed body may comprise a first gear tooth formed on an inner surface thereof, wherein the second arc hole of the fixed body may comprise a second gear tooth formed on an inner surface thereof, wherein the first protrusion of the movable body may comprise a first pinion coupled to the first gear tooth, and wherein the second protrusion of the movable body may comprise a second pinion coupled to the second gear tooth.

The movable body may have a frame shape with an inner space that is vertically perforated.

The light may comprise a light source mounted on an inner wall thereof facing the inner space of the frame shape.

The light may comprise a transparent light diffusion plate configured to block the inner space of the frame shape.

The light may be flat-dome indirect lighting.

The light source may comprise first column light sources and second column light sources, and the first column light sources and the second column light sources may be arranged alternately in a zigzag form.

The light source may be configured to radiate light in the red wavelength spectrum.

According to another embodiment of the present disclosure, a light for use in an apparatus for inspecting an electrode assembly of a secondary battery is provided, the light having a frame shape with an inner space that is vertically perforated.

The light may further comprise a light source mounted on an inner wall facing the inner space of the frame shape.

The light may further comprise a transparent light diffusion plate configured to block the inner space of the frame shape.

The light may be flat-dome indirect lighting.

The apparatus for inspecting the electrode assembly of the secondary battery may comprise or take the form of the apparatus of the first embodiment.

According to another embodiment of the present disclosure, a tilting device for use in an apparatus for inspecting an electrode assembly of a secondary battery includes a fixed body, which may be attachable to a structure, and a movable body rotatably coupled to the fixed body and configured to adjust an angle of light radiated onto an electrode assembly of a secondary battery. The fixed body has a first arc hole and a second arc hole that symmetrically face each other, and the movable body includes a first protrusion inserted into the first arc hole and a second protrusion inserted into the second arc hole.

The first arc hole of the fixed body may comprise a first gear tooth formed on an inner surface thereof, wherein the second arc hole of the fixed body may comprise a second gear tooth formed on an inner surface thereof, wherein the first protrusion of the movable body may comprise a first pinion coupled to the first gear tooth, and wherein the second protrusion of the movable body may comprise a second pinion coupled to the second gear tooth.

The movable body may have a frame shape with an inner space that is vertically perforated.

The apparatus for inspecting the electrode assembly of the secondary battery may comprise or take the form of the apparatus of the first embodiment.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 schematically illustrates an electrode assembly of a secondary battery;
FIG. 2 is a schematic view illustrating an apparatus for inspecting an electrode assembly according to an embodiment of the present disclosure;
FIGS. 3A and 3B are schematic side views illustrating a tilting or lighting rotation action in an apparatus for inspecting an electrode assembly according to some embodiments of the present disclosure;
FIG. 4 is a perspective view of an apparatus for inspecting an electrode assembly according to some embodiments of the present disclosure;
FIG. 5 is a side view of the apparatus for inspecting an electrode assembly according to some embodiments of the present disclosure in which a tilting portion is positioned at a neutral position;
FIG. 6A is a side view of the apparatus for inspecting an electrode assembly shown in FIG. 5 in which the apparatus for inspecting an electrode assembly is rotated clockwise by the tilting portion;
FIG. 6B is a side view of the apparatus for inspecting an electrode assembly shown in FIG. 5 in which the apparatus for inspecting an electrode assembly is rotated counterclockwise by the tilting portion;
FIG. 7 is a perspective view of a lighting fixture according to some embodiments;
FIG. 8 is a cross-sectional view taken along the line A-A in FIG. 7;
FIG. 9 is a front view of a recessed portion of a lighting fixture in which a light source is mounted;
FIG. 10 is a side view of an apparatus for inspecting an electrode assembly according to other embodiments of the present disclosure;
FIG. 11 illustrates arc holes of a tilting portion according to other embodiments;
FIG. 12 schematically illustrates a pouch-type secondary battery including an electrode assembly inspected by using the apparatus for inspecting an electrode assembly according to embodiments of the present disclosure;
FIG. 13 is a cross-sectional view of a cylindrical secondary battery including an electrode assembly inspected by using the apparatus for inspecting an electrode assembly according to embodiments of the present disclosure;
FIG. 14 is a cross-sectional view of a prismatic secondary battery including an electrode assembly inspected by using the apparatus for inspecting an electrode assembly according to embodiments of the present disclosure; and
FIG. 15 is a cross-sectional view taken along the line I-I' in FIG. 14.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

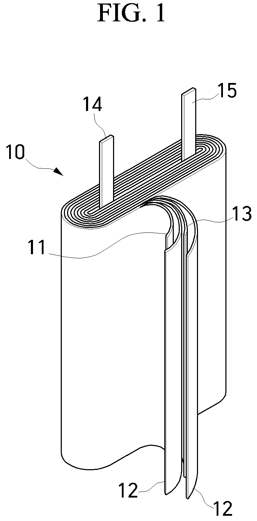

FIG. 1 shows an electrode assembly 10 of a secondary battery.

Referring to FIG. 1, the electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to a longitudinal direction of a case. In other embodiments, the electrode assembly 10 may be a stack type rather than a winding type, but the shape of the electrode assembly 10 is not limited in the present disclosure. For example, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

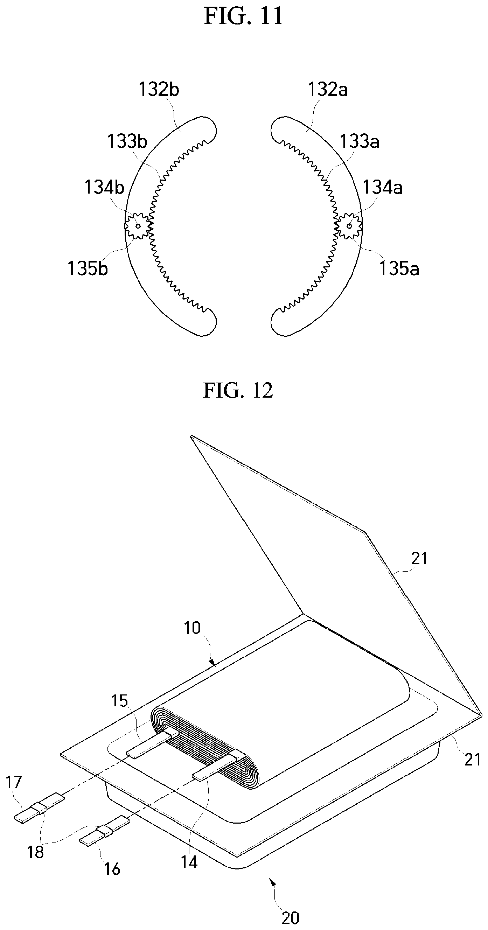

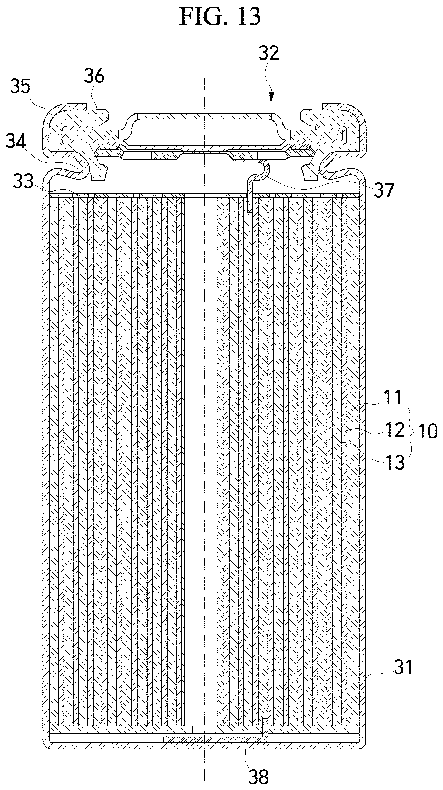

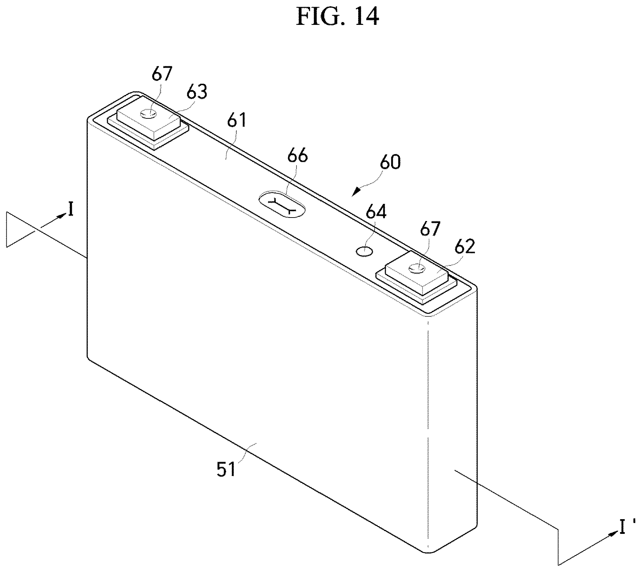

In some embodiments, the electrode assembly 10 may be accommodated in a case along with an electrolyte. In a pouch-type secondary battery, an electrode assembly 10 may be accommodated in a pouch made of flexible material (see, e.g., FIG. 12). In a cylindrical or prismatic secondary battery, an electrode assembly 10 may be accommodated in a cylindrical or prismatic metal casing (see, e.g., FIGS. 13 and 14).

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b- c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

A process of manufacturing an electrode plate (that is, a first electrode plate 11 or a second electrode plate 13) of the electrode assembly 10 will be briefly described.

A substrate for manufacturing the electrode plate may be a metal foil including aluminum (Al) (in the case of, for example, a positive electrode) or a metal foil including copper (Cu) or nickel (Ni) (in the case of, for example, a negative electrode). In a coating process, a slurry or powder-state mixture (e.g., an electrode material) prepared in advance is applied on the substrate to form a coating layer. The mixture (e.g., a material mixture) applied here is as described above. Next, in a roll pressing process, the coated substrate may be rolled with rollers to manufacture a high-capacity and high-density secondary battery. The rolled substrate is cut in a length direction in a slitting process to separate individual electrode plates and are then shaped into individual electrode plates including electrode tabs in a notching process.

As described above, an electrode assembly manufactured by winding or stacking electrode plates and separators is assembled in (e.g., is arranged or placed into) a soft pouch or a hard case (or a can) to manufacture a secondary battery. A risk of secondary batteries is ignition, and one potential cause of ignition is a folding phenomenon of electrode tabs of an electrode assembly. When all or some of the electrode tabs are folded, a battery may overheat and ignite due to the resistance at a folded portion of a tab when current is concentrated for a short period of time. In addition, a short circuit may occur due to direct contact between a positive electrode tab and a negative electrode tab due to the folding of the electrode tabs, which may cause smoke or ignition in a battery.

As such, a secondary battery manufacturing process may include inspecting a state or position of electrode tabs. Currently, an X-ray generator and a detector are used to acquire projected images of electrode tabs to detect defects in omission, folding, shapes, etc., of the electrode tabs. Such an electrode assembly inspection technique is an expensive inspection method because it uses X-ray equipment to acquire projected images of an electrode tab and three-dimensional (3D) vision equipment.

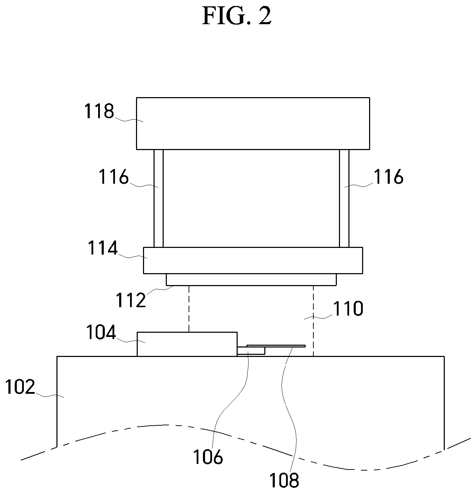

FIG. 2 is a schematic view illustrating an apparatus for inspecting an electrode assembly 104 according to embodiments of the present disclosure.

The apparatus may include a table 102 on which an electrode assembly 104 to be inspected, for example, the electrode assembly 104 including an electrode tab 106 and a lead (or terminal) 108 connected thereto, is placed, a light (e.g., a lighting fixture or lighting source) 112 that is configured to radiate light 110 onto the electrode assembly 104, a lighting holder 114 that supports the light 112, a distance adjustment portion 116 that adjusts a distance between the lighting holder 114 and the electrode assembly 104, and a lighting tilting portion 118 that adjusts an angle at which the lighting holder 114 and the light 112 radiates light 110 onto the electrode assembly 104.

An image acquisition device, such as an optical camera or a charge-coupled device (CCD), that acquires an image of the electrode assembly 104 onto which light 110 is irradiated is not shown. In various embodiments, the image acquisition device may be installed in the lighting tilting portion 118 to acquire an image of the electrode assembly 104 through the lighting holder 114.

In this way, the apparatus for inspecting an electrode assembly according to some embodiments of the present disclosure is a two dimensional (2D) vision inspecting apparatus that radiates the light 110 onto the electrode assembly 104 to acquire an image thereof. When electrode tabs or other elements of the electrode assembly 104 are inspected by using a conventional 2D vision inspection apparatus, there are problems such as non-uniformity of radiated light and lack of light (or insufficient light), and mechanically, it is difficult to adjust a distance between a light and an electrode assembly and to adjust an angle of the light. Therefore, embodiments of the present disclosure provide a 2D inspecting apparatus that is useful for inspecting electrode assemblies and exhibits performance sufficient to replace existing X-ray-based 3D vision inspection systems.

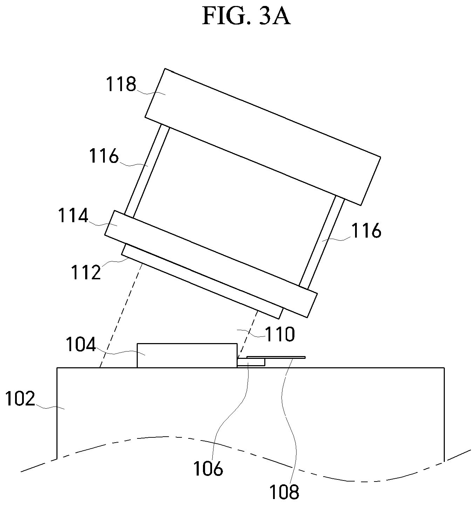

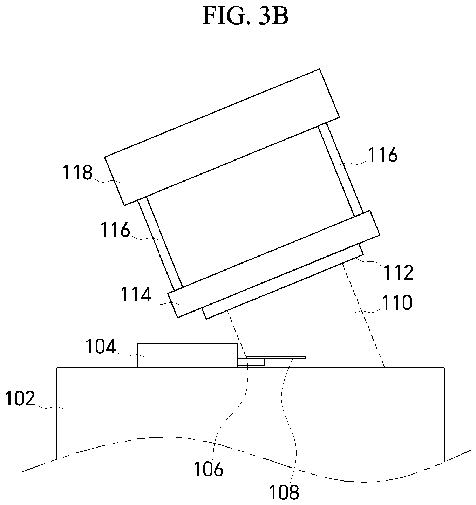

FIGS. 3A and 3B schematically illustrate a tilting or lighting rotation action of the apparatus for inspecting an electrode assembly according to some embodiments of the present disclosure. The tilting portion 118 may be operated by a rotational action based on (or with respect to) a fixed body. The lighting holder 114 and the light 112 may be tilted by the tilting portion 118 so that a radiation direction or angle of the light 110 may be changed.

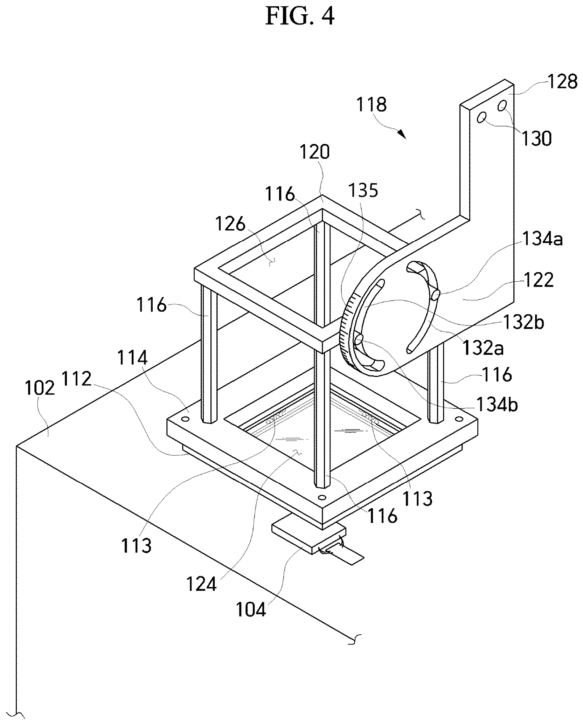

FIG. 4 is a perspective view of an apparatus for inspecting an electrode assembly according to some embodiments of the present disclosure.

The apparatus for inspecting an electrode assembly may be positioned above and spaced a predetermined distance apart from the electrode assembly 104 placed on the table 102.

The lighting holder 114 has an approximately quadrangular frame shape with an inner space that is vertically perforated. Similar to the lighting holder 114, the light 112 attached to a bottom of the lighting holder 114 also has an approximately quadrangular frame shape with an inner space that is vertically perforated. However, the lighting holder 114 and the light 112 are not limited to quadrangular frame shapes. In some other embodiments, the lighting holder 114 and the light 112 may have circular frame shapes.

The distance adjustment portion 116 may have a bar shape erected on (e.g., mounted on) an upper surface of the lighting holder 114. As the distance adjustment portion 116, a support (e.g., a hexagonal support) configured to adjust a height along a Z axis may be used to reduce or minimize a layout of the apparatus for inspecting an electrode assembly, ensure a sufficient amount of light, and provide a degree of freedom of a target to be irradiated (e.g., the electrode assembly 104). The hexagonal supporter is used as a supporter configured to adjust a distance from a target (e.g., the electrode assembly 10), thereby reducing or minimizing a time necessary to perform decoupling, adjusting, and recoupling. When the hexagonal support is used, an adjusting and recoupling speed may be reduced to about 20% as compared to conventional screw-type supports. However, the present disclosure is not limited to the hexagonal support as the distance adjustment portion 116.

When the apparatus for inspecting an electrode assembly according to the embodiments of the present disclosure is operated, because the electrode assembly 104, which is a target onto which light is radiated and which is to be inspected, is different for each product and each situation, the distance adjustment portion 116 be designed to respond to and account for these different conditions.

The tilting portion 118 may be configured to be rotatable between an angle of 0° to about 180° for the same reason as the distance adjustment portion 116, that is, to reduce or minimize a layout of the apparatus for inspecting an electrode assembly, ensure a sufficient amount of light, and provide adequate degree of freedom of a target to be irradiated. The tilting portion 118 may primarily include a fixed body 122 attached or attachable to a structure and a movable body 120 rotatably assembled, e.g. coupled, to the fixed body 122.

The fixed body 122 may include an installation end portion 128 that is installed and fastened to a structure (e.g., to an inspection equipment housing or chassis) by a bolt or the like. FIG. 4 illustrates an embodiment in which the fixed body 122 has an approximate L-shape, the installation end portion 128 is a protruding end portion, and a hole (or an opening) 130 into which a fastening component is inserted is provided, but the present disclosure is not limited thereto.

A pair of a first arc hole (e.g., first arc opening) 132a and a second arc hole (e.g., second arc opening) 132b are symmetrically perforated in (or formed in) a main body of the fixed body 122 to face each other. When the first arc hole 132a and the second arc hole 132b are connected to each other, the first arc hole 132a and the second arc hole 132b may form a circle or an ellipse.

The movable body 120 is fixed onto four bars or supports constituting (or forming) the distance adjustment portion 116. A shape of the movable body 120 is similar to a shape of the lighting holder 114. For example, the movable body 120 may have a shape such as a quadrangular or circular frame shape with an inner space that is vertically perforated. In this way, the electrode assembly 104 placed on the table 102 may be seen (or visible) from above through the inner spaces of the light 112, the lighting holder 114, and the movable body 120, and an image may be acquired from above by the image acquisition device.

A first protrusion 134a and a second protrusion 134b protrude laterally from a side surface of the movable body 120. The first protrusion 134a and the second protrusion 134b are respectively connected to the first arc hole 132a and the second arc hole 132b of the fixed body 122. Because the fixed body 122 is fixed, the first protrusion 134a and the second protrusion 134b of the movable body 120 may be rotated, for example, tilted, along inner surfaces of the first arc hole 132a and the second arc hole 132b of the fixed body 122. Accordingly, the lighting holder 114 and the light 112 connected to the movable body 120 may also be tilted.

To allow an operator to know a tilting angle of the movable body 120, a rotation angle scale 135 is marked on a portion of the fixed body 122. When tilting at a precise angle is necessary, the scale 135 may be used to adjust a tilting angle or see a current tilting angle value without a separate protractor.

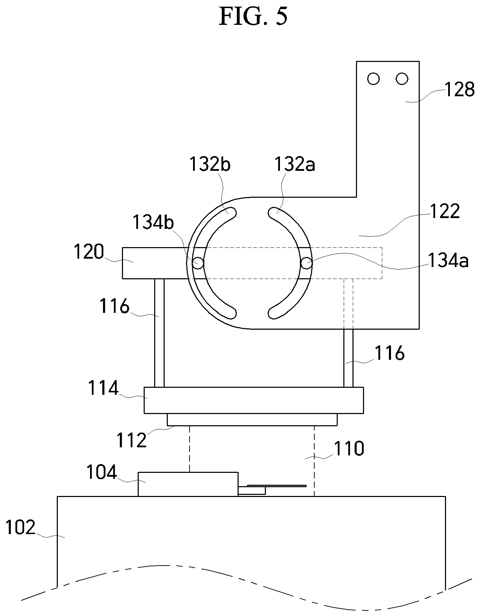

FIG. 5 is a side view of the apparatus for inspecting an electrode assembly according to some embodiments of the present disclosure and illustrates the tilting portion 118 positioned at a neutral position. The first protrusion 134a and the second protrusion 134b of the movable body 120 are positioned at approximately central potions of the first arc hole 132a and the second arc hole 132b of the fixed body 122, and the light 110 radiated from the light 112 is vertically radiated downwardly.

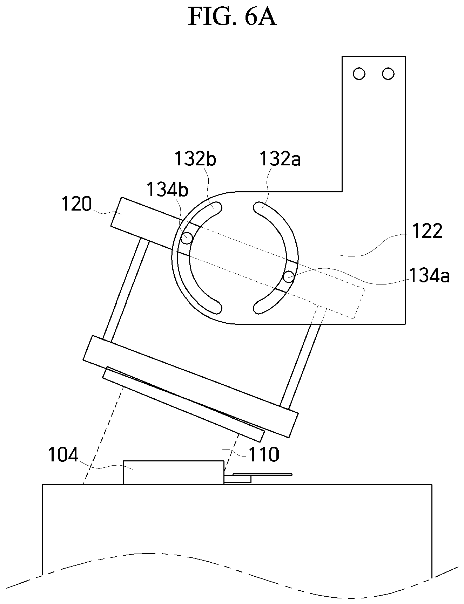

FIG. 6A is a side view of the apparatus for inspecting an electrode assembly shown in FIG. 5 in a state in which the apparatus for inspecting an electrode assembly is rotated clockwise by the tilting portion 118. The first protrusion 134a of the movable body 120 is positioned above the first arc hole 132a of the fixed body 122, the second protrusion 134b is positioned below the second arc hole 132b, and the light 110 radiated from the light 112 obliquely illuminates the electrode assembly 104 from the left.

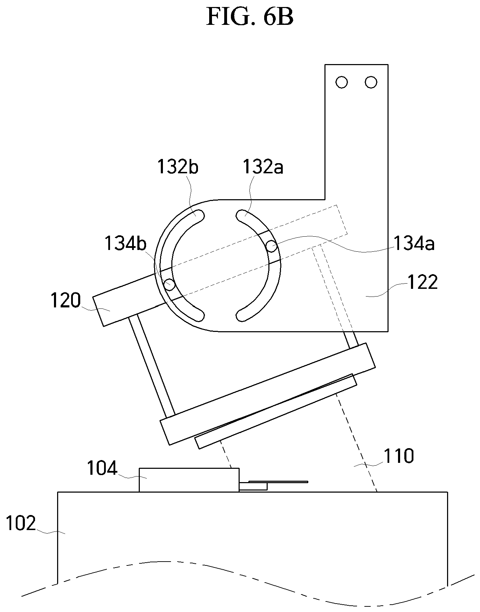

FIG. 6B is a side view of the apparatus for inspecting an electrode assembly shown in FIG. 5 in a state in which the apparatus for inspecting an electrode assembly is rotated anticlockwise (or counterclockwise) by the tilting portion 118. The first protrusion 134a of the movable body 120 is positioned below the first arc hole 132a of the fixed body 122, the second protrusion 134b is positioned above the second arc hole 132b, and the light 110 radiated from the light 112 obliquely illuminates the electrode assembly 104 from the right.

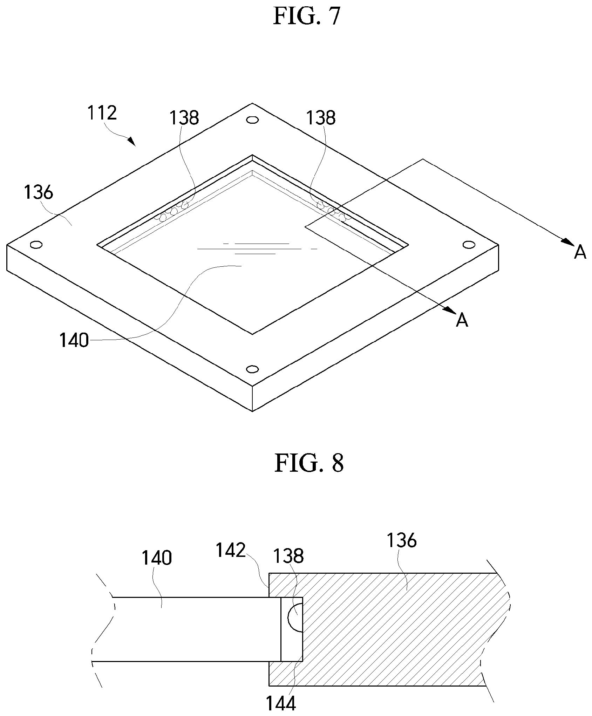

FIG. 7 is a perspective view of the light 112 according to some embodiments. As described above, an inner space of a quadrangular frame 136 is vertically perforated (e.g., has a through hole extending vertically therethrough). At least one of inner walls forming the inner space includes (or is equipped with) a light source 138, such as a light-emitting diode (LED). A groove may be formed inwardly toward each inner wall, and a transparent light diffusion plate 140 may be fitted into the groove. Accordingly, light laterally radiated from the light source 138 may be diffused through the transparent light diffusion plate 140 to illuminate the electrode assembly 104 positioned at a lower side by wide surface light.

Light emitted from the light source 138 is ideally uniformly radiated onto a target to be irradiated, that is, the entire portion of the electrode assembly. To this end, indirect radiation type lighting may provide a more uniform image compared to a direct radiation type lighting.

The indirect lighting type, which includes lighting by radiating light from the side of a flat surface, may be referred to as a flat-dome indirect lighting. By applying the light 112 of a flat-dome indirect radiation type, the number of LEDs may be reduced as compared to other lighting methods.

FIG. 8 is a cross-sectional view taken along the line A-A in FIG. 7. The light source 138 is mounted in a recessed portion 144 recessed into an inner wall 142 of the frame 136, and the transparent light diffusion plate 140 is fitted into the recessed portion 144. The transparent light diffusion plate 140 may be made of polypropylene (PP).

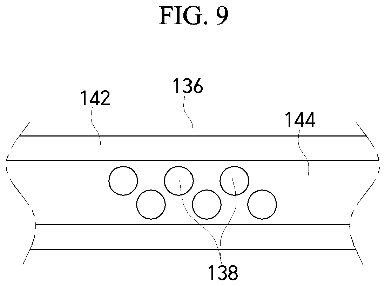

FIG. 9 illustrates a front view of the recessed portion 144 in which the light source 138 is mounted. In the illustrated embodiment, to increase an amount of light emitted from the limited space of the recessed portion 144, six light sources 138 are arranged in two columns, and a first column of the light sources and a second column of the light sources are alternated in a zigzag form. Mounting the light sources 138 in multiple columns in a zigzag form instead of in one column can increase an amount of light by a factor of two or more. However, the number and arrangement of the light sources 138 are not limited thereto. For example, ten or more light sources 138 may be used, and instead of mounting a small number of the light sources 138 in only a partial area of the inner wall 142 of the frame 136, as shown, a plurality of light sources 138 may be mounted in (or across) the entire area of the inner wall 142. The arrangement and number of the light sources 138, such as LEDs, sufficient to ensure brightness and uniformity of the light 112 in a limited space should be applied. In addition, to concurrently (or simultaneously) inspect a positive electrode material (e.g., Al), a negative electrode material (e.g., Cu), and a separator material, which have different reflectivities, with uniform image quality, light in the visible spectrum may be used, and in particular, a light source with a red-series color and a wavelength in a range of about 620 nm to about 750 nm may be used for the light 112. The red-series light source provides a light reflectivity difference between a Cu portion, an Al portion, and a separator portion of the electrode assembly 104 to be irradiated is relatively good in the visible light spectrum excluding a red-series area, and a shade difference of an image for 2D vision inspection has been tested at the lowest level when red-series light is radiated (the narrower the range of shade difference, the easier the lighting setting becomes).

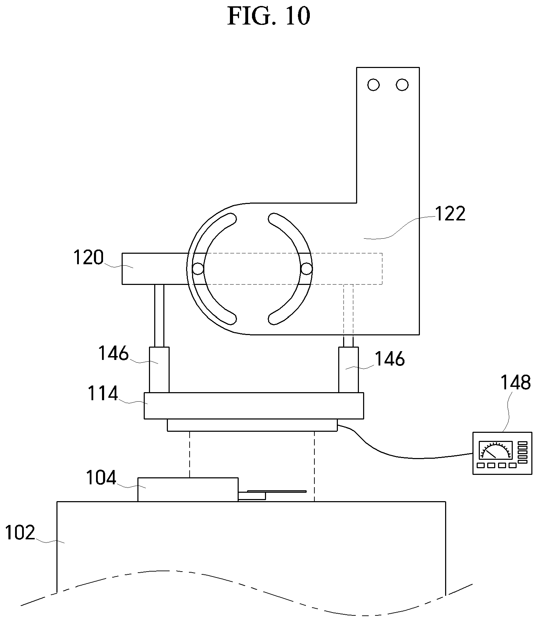

FIG. 10 is a side view of an apparatus for inspecting an electrode assembly according to other embodiments of the present disclosure.

A distance adjustment portion for adjusting a distance between the electrode assembly 104 and the light 112 may be implemented as a compression/extension cylinder 146, such as a pneumatic or hydraulic cylinder, instead of the above-described support. The compression/extension cylinder 146 may be operated by an electric signal or a mechanical actuator to increase or decrease a distance between the lighting holder 114 and the movable body 120 to adjust the distance between the electrode assembly 104 and the light 112.

FIG. 10 also illustrates a voltage-adjusted power supply 148 for adjusting an amount of light emitted by the light 112. Accordingly, in addition to adjusting the number and/or arrangement of the light sources 138 as described with reference to FIG. 9, by adjusting a voltage and operating time of the power supply 148, an amount of light of the light 112 may be optimized for 2D vision inspection of the electrode assembly 104. For example, the power supply 148 may have a voltage adjustment range of about 0 V to about 24 V.

FIG. 11 illustrates the arc holes 132a and 132b of the tilting portion 118 according to other embodiments. In FIGS. 5, 6A, and 6B, described above, the arc holes 132a and 132b are illustrated as having a smooth inner surface, but in the illustrated embodiment, gear teeth 133a and 133b are formed on at least portions of inner surfaces of the arc holes 132a and 132b of the fixed body 122, and each of the protrusions 134a and 134b of the movable body 120 is implemented as a rotating pinion. Accordingly, the protrusions (or pinions) 134a and 134b may be engaged with the gear teeth 133a and 133b of the arc holes 132a and 132b, and when the pinions 134a and 134b are rotated, the movable body 120 may be tilted along the arc holes 132a and 132b of the fixed body 122.

In the illustrated embodiment, a motor or actuator that rotates the pinions 134a and 34b may be used to provide electric tilting.

FIG. 12 schematically illustrates a pouch-type secondary battery including an electrode assembly inspected by using the apparatus for inspecting an electrode assembly according to embodiments of the present disclosure described above.

In FIG. 12, the pouch-type secondary battery may include an electrode assembly 10 and a pouch 20 that accommodates the electrode assembly 10.

A first electrode tab 14 and a second electrode tab 15 of the electrode assembly 10 as shown in FIG. 1 may be welded and electrically connected to an external first terminal lead 16 and an external second terminal lead 17, respectively. Tab films 18 for insulation from the pouch 20 may be attached to the first terminal lead 16 and the second terminal lead 17.

In a state in which the electrode assembly 10 is accommodated, sealing portions 21 may be in contact with each other to seal the pouch 20, and in such an embodiment, the sealing may be achieved in a state in which the tab films 18 are interposed between the sealing portions 21. The sealing portion 21 of the pouch 20 may be made of a heat fusion material. Because the heat fusion material generally has weak adhesion to metals, the sealing portion 21 may be fused to the pouch 20 by interposing the tab films 18 in the form of a thin film.

FIG. 13 is a cross-sectional view of a cylindrical secondary battery including an electrode assembly inspected by using the apparatus for inspecting an electrode assembly according to embodiments of the present disclosure described above.

The cylindrical secondary battery includes an electrode assembly 10, a case 31 that accommodates the electrode assembly 10 and an electrolyte therein, a cap assembly 32 that is coupled to an opening of the case 31 to seal the case 31, and an insulating plate 33 that is positioned between the electrode assembly 10 and the cap assembly 32 inside the case 31.

The case 31 accommodates the electrode assembly 10 and the electrolyte and forms an exterior of a battery together with the cap assembly 32. The case 31 may include a body having an approximately cylindrical shape and a bottom. A beading portion 34 that is deformed inwardly may be formed in the body of the case 31, and a crimping portion 35 that is bent inwardly may be formed at an end portion of an opening of the body.

The beading portion 34 may prevent the electrode assembly 10 from moving inside the case 31 and may facilitate the seating of a gasket 36 and the cap assembly 32. The crimping portion 35 may firmly fix the cap assembly 32 by pressing an edge of the cap assembly 32 through the gasket 36. The case 31 may be made of, for example, nickel-plated iron.

The cap assembly 32 may be fixed inside the crimping portion 35 through the gasket 36 to seal the case 31. A first lead tab 37 drawn out from the electrode assembly 10 may be connected to the cap assembly 32, and a second lead tab 38 drawn out from the electrode assembly 10 may be electrically connected to the bottom of the case 31.

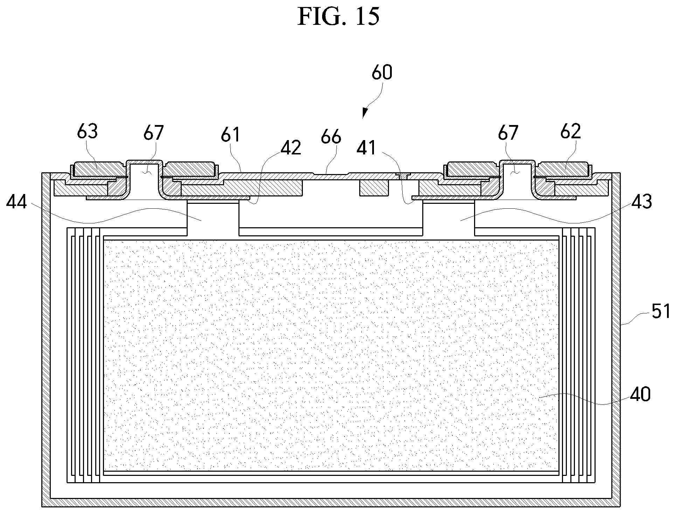

FIG. 14 illustrates an exterior of a prismatic secondary battery including an electrode assembly inspected by using the apparatus for inspecting an electrode assembly according to embodiments of the present disclosure described above is applied. FIG. 15 is a cross-sectional view taken along the line I-I' in FIG. 14.

An electrode assembly 40 in the prismatic secondary battery may also be formed by winding or stacking a first electrode plate, a separator, and a second electrode plate, which are formed in a plate shape or film shape, as shown in, for example, FIG. 1. When the electrode assembly 40 is a wound stack, a winding axis may be parallel to a longitudinal direction of the case 51. In addition, the electrode assembly 40 may be a stack type other than a wound type, but a shape of the electrode assembly 40 is not limited in the present disclosure. In addition, the electrode assembly 40 may be a Z-stack electrode assembly in which the first electrode plate and the second electrode plate are inserted into both sides of the separator, which is bent (or folded) into a Z-stack. In addition, one or more electrode assemblies 40 may be stacked such that long side surfaces thereof are adjacent to each other and may be accommodated inside the case 51, and the number of electrode assemblies is not limited in the present disclosure. The first electrode plate of the electrode assembly 40 may act as a negative electrode, and the second electrode plate may act as a negative electrode, or vice versa.

A first electrode tab 43 of the first electrode plate and a second electrode tab 44 of the second electrode plate are each positioned on the electrode assembly 40. In some embodiments, the electrode assembly 40 may be accommodated in a case 51 together with an electrolyte.

The first electrode tab 43 and the second electrode tab 44 may be connected to a first current collector 41 and a second current collector 42 by welding, respectively. The first current collector 41 and the second current collector 42 are respectively connected to a first terminal 62 and the second terminal 63 through connection members 67. In some embodiments, outer peripheral surfaces of the connection member 67 may be threaded and may be connected to the first terminal 62 and the second terminal 63 via screw coupling. However, embodiments of the present disclosure are not limited thereto, and the connection members 67 may be connected to the first terminal 62 and the second terminal 63 by, for example, riveting or welding.

To increase the brightness of lighting and to provide uniform light radiation, a type of the lighting, the arrangement and number of light sources, such as LEDs, and a light wavelength spectrum are optimized, and related mechanical elements are designed accordingly, thereby concurrently (or simultaneously) inspecting elements with different reflectivities that constitute an electrode assembly is possible.

Existing electrode assembly-related inspections (e.g., tab folding inspection) use a method using X-rays and 3D vision for acquiring and inspecting projected images. However, according to embodiments of the present disclosure, the effect of existing electrode assembly inspections can be achieved with a 2D vision inspection apparatus through optimization of lighting and mechanical parts without use of expensive X-rays and 3D vision.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. An apparatus for inspecting an electrode assembly of a secondary battery, the apparatus comprising:
a table configured to receive an electrode assembly that is to be inspected;
a light configured to radiate light onto the electrode assembly;
a lighting holder configured to support the light;
a distance adjustment portion configured to adjust a distance between the lighting holder and the electrode assembly; and
a tilting portion configured to adjust an angle at which the lighting holder radiates light onto the electrode assembly,
wherein the tilting portion rotates the light together with the lighting holder.

2. The apparatus as claimed in claim 1, wherein the lighting holder has a frame shape with an inner space that is vertically perforated.

3. The apparatus as claimed in claim 1 or 2, wherein the light has a frame shape with an inner space that is vertically perforated.

4. The apparatus as claimed in claim 1, 2 or 3, wherein the distance adjustment portion comprises a bar installed in the lighting holder.

5. The apparatus as claimed in any preceding claim, wherein the distance adjustment portion comprises a compression/extension cylinder configured to decrease or increase a distance between the lighting holder and the tilting portion.

6. The apparatus as claimed in any preceding claim, wherein the tilting portion comprises a fixed body and a movable body rotatably coupled to the fixed body,
wherein the fixed body has a first arc hole and a second arc hole that symmetrically face each other, and
wherein the movable body comprises a first protrusion inserted into the first arc hole and a second protrusion inserted into the second arc hole.

7. The apparatus as claimed in claim 6, wherein:
the first arc hole in the fixed body comprises a first gear tooth formed on an inner surface thereof;
the second arc hole of the fixed body comprises a second gear tooth formed on an inner surface thereof;
the first protrusion of the movable body comprises a first pinion coupled to the first gear tooth; and
the second protrusion of the movable body comprises a second pinion coupled to the second gear tooth.

8. The apparatus as claimed in claim 6 or 7, wherein the movable body has a frame shape with an inner space that is vertically perforated.

9. The apparatus as claimed in any one of claims 3 to 8, wherein the light comprises a light source mounted on an inner wall thereof facing the inner space of the frame shape of the light.

10. The apparatus as claimed in any one of claims 3 to 9, wherein the light comprises a transparent light diffusion plate configured to block the inner space of the frame shape of the light.

11. A light having a frame shape with an inner space that is vertically perforated and is configured for use in an apparatus for inspecting an electrode assembly of a secondary battery.

12. The light as claimed in claim 11, further comprising at least one of:
a light source mounted on an inner wall facing the inner space of the frame shape; and
a transparent light diffusion plate configured to block the inner space of the frame shape.

13. A tilting device for use in an apparatus for inspecting an electrode assembly of a secondary battery, the tilting device comprising:
a fixed body; and
a movable body rotatably coupled to the fixed body and configured to adjust an angle of light radiated onto an electrode assembly of a secondary battery,
wherein the fixed body has a first arc hole and a second arc hole that symmetrically face each other, and
wherein the movable body comprises a first protrusion inserted into the first arc hole and a second protrusion inserted into the second arc hole.

14. The tilting device as claimed in claim 13, wherein:
the first arc hole of the fixed body comprises a first gear tooth formed on an inner surface thereof;
the second arc hole of the fixed body comprises a second gear tooth formed on an inner surface thereof;
the first protrusion of the movable body comprises a first pinion coupled to the first gear tooth; and
the second protrusion of the movable body comprises a second pinion coupled to the second gear tooth.

15. The tilting device as claimed in claim 13 or 14, wherein the movable body has a frame shape with an inner space that is vertically perforated.
